# DEMANDE DE BREVET EUROPEEN

(11) **EP 4 585 816 A1**
(43) Date de publication de la demande: **16.07.2025**
(21) Numéro de dépôt: 25150530.1
(22) Date de dépôt: 07.01.2025
(51) Int. Cl.: F16C 11/04, F16C 17/00, E05C 1/00, E05G 1/00, E05D 11/10, E05B 83/36, E05B 35/00, E05C 1/06

(54) **DISPOSITIF DE VERROUILLAGE/DEVERROUILLAGE ET ÉLÉMENT PIVOTANT MUNI D'UN TEL DISPOSITIF DE VERROUILLAGE/ DEVERROUILLAGE**

(30) Priorité: 11.01.2024 FR 2400252
(71) Demandeur: SNCF Voyageurs, 93200 Saint Denis (FR)
(72) Inventeur: PETAIN, Jean-Pierre, 67310 ROMANSWILLER (FR); WALTHER, Guillaume, 67490 LUPSTEIN (FR)
(74) Mandataire: Bringer IP

(57) **Abrégé**

L'invention concerne un dispositif de verrouillage/déverrouillage pour élément pivotant comprenant :
- un axe pivot (3) solidaire en rotation avec ledit élément pivotant et présentant au moins deux méplats (8, 9) s'étendant parallèlement,
- un mécanisme de verrouillage,
- un carter (1) configuré pour recevoir ledit axe pivot (3) et ledit mécanisme de verrouillage,
ledit mécanisme de verrouillage comprenant :
∘ un axe (4) de verrouillage s'étendant orthogonalement audit axe pivot (3), ledit axe (4) de verrouillage étant mobile en rotation,
∘ un organe, dit fourche (5), monté sur ledit axe (4) de verrouillage, présentant deux bras (25, 26) et mobile en rotation entre une position de verrouillage dans laquelle lesdits bras (25, 26) s'étendent au contact desdits méplats (9) dudit axe pivot (3) en empêchant toute rotation dudit axe pivot (3), et une position de déverrouillage dudit axe pivot (3).

## Description

### Domaine technique de l'invention

La présente invention concerne le domaine des systèmes de verrouillage d'éléments mobiles en rotation. L'invention concerne plus particulièrement un dispositif de verrouillage d'une clayette pivotante.

### Arrière-plan technologique

Les véhicules ferroviaires sont équipés de nombreux éléments mobiles susceptibles d'être actionnés par un opérateur à l'aide d'un outil telle qu'une clé. Dans le domaine ferroviaire, de nombreux éléments doivent être actionnés à l'aide d'une clé présentant une extrémité comprenant un alésage présentant une section droite de forme carrée, couramment appelée clé de Berne et surnommée « carré ». Ainsi certaines portes ou trappes par exemple sont verrouillées et déverrouillées par les opérateurs à l'aide d'une telle clé de Berne permettant d'actionner par une rotation, le plus souvent de 90°, un axe dudit élément dont l'extrémité présente une section droite en forme de carré.

Un tel fonctionnement convient pour des éléments ne subissant pas d'importantes sollicitations mécaniques.

Les systèmes de verrouillage/déverrouillage connus équipant de tels éléments pouvant être actionnés par une clé de Berne ne permettent pas une reprise d'efforts importants. Lorsque l'élément à actionner subit des efforts importants il est donc nécessaire de prévoir un mécanisme permettant de limiter ceux-ci pour préserver le fonctionnement normal de l'ensemble.

L'invention vise à pallier ces inconvénients.

On connait par ailleurs de EP 4 290 038 une charnière pour relier de manière amovible et pivotante une porte ou un volet à un cadre. La charnière comporte un élément qui comprend un axe cylindrique. Un élément de fixation lié à un ressort précontraint coudé est maintenu sur l'axe d'un deuxième élément de fixation, le ressort exerçant une force de rappel qui ramène le deuxième élément de fixation en position de libération.

Une telle charnière ne peut pas constituer un système de verrouillage d'éléments mobiles en rotation tel qu'un dispositif de verrouillage/déverrouillage selon l'invention.

### Objectifs de l'invention

L'invention vise à fournir, dans au moins un mode de réalisation, un dispositif de verrouillage/déverrouillage dont l'actionnement par un opérateur ne nécessite qu'un effort très limité.

L'invention vise également à fournir, dans au moins un mode de réalisation, un dispositif de verrouillage/déverrouillage, qui soit, de manière générale, fiable, particulièrement robuste et simple à utiliser.

L'invention vise aussi à fournir, dans au moins un mode de réalisation, un dispositif de verrouillage/déverrouillage configuré pour pouvoir se verrouiller spontanément en cas de mauvaise manipulation ou d' actionnement partiel de la part d'un opérateur.

L'invention vise aussi à fournir, dans au moins un mode de réalisation, un dispositif de verrouillage/déverrouillage permettant de limiter les risques de vandalisme et de contribuer à la sécurité des passagers d'un véhicule ferroviaire.

### Exposé de l'invention

Pour ce faire, l'invention concerne un dispositif de verrouillage/déverrouillage pour élément pivotant, ledit dispositif comprenant :
- un axe pivot s'étendant selon une direction longitudinale et configuré pour pouvoir être solidaire en rotation avec ledit élément pivotant,
- un mécanisme de verrouillage en rotation dudit axe pivot,
ledit dispositif étant caractérisé en ce qu'il comprend en outre :
- un carter configuré pour recevoir ledit axe pivot et ledit mécanisme de verrouillage, ledit axe pivot et ledit mécanisme de verrouillage étant disposés à l'intérieur dudit carter,
et en ce que :
- ledit axe pivot présente au moins deux méplats s'étendant parallèlement à ladite direction longitudinale dudit axe pivot,
- ledit mécanisme de verrouillage comprend :
   o un axe de verrouillage s'étendant orthogonalement audit axe pivot, ledit axe de verrouillage étant mobile en rotation,
   o un organe, dit fourche, monté sur ledit axe de verrouillage et solidaire en rotation de celui-ci, ladite fourche présentant deux bras s'étendant chacun sensiblement orthogonalement à la direction longitudinale dudit axe de verrouillage et étant configurée pour pouvoir être mobile en rotation entre au moins une position de verrouillage dans laquelle lesdits bras s'étendent respectivement au moins en partie au contact desdits méplats dudit axe pivot, de façon à empêcher toute rotation dudit axe pivot, et au moins une position de déverrouillage dans laquelle ladite fourche n'empêche pas la rotation dudit axe pivot.

Ainsi et selon l'invention, un tel dispositif de verrouillage/déverrouillage convient pour divers éléments pivotants présentant au moins deux positions distinctes pouvant être adoptées par rotation autour d'au moins un axe de rotation.

Un dispositif de verrouillage/déverrouillage selon l'invention comprenant un axe pivot, un mécanisme de verrouillage et un carter configurés de la façon définie ci-dessus permet de procurer un dispositif non seulement robuste et fiable mais également particulièrement adapté pour transmettre des efforts importants, c'est-à-dire permettant d'équiper des éléments pivotants lourds et/ou de tailles importantes.

En particulier, dans ladite position de verrouillage dans laquelle lesdits bras s'étendent respectivement au moins en partie au contact desdits méplats dudit axe pivot, de façon à empêcher toute rotation dudit axe pivot, par l'expression « toute rotation » on entend toute rotation à la fois dans un premier sens de rotation et dans un second sens de rotation dudit axe pivot, inverse dudit premier sens de rotation.

En outre, avantageusement et selon l'invention, lesdits au moins deux méplats dudit axe pivot s'étendent parallèlement entre eux. Ainsi, la distance séparant lesdits au moins deux méplats parallèles entre eux (selon une droite normale à chaque méplat) est sensiblement identique à la distance séparant au moins deux points de chacun des deux bras de ladite fourche au contact desdits méplats dans ladite position de verrouillage, de façon à ce que les deux bras enserrent ledit axe pivot, l'axe pivot étant disposé au moins en partie entre lesdits bras de la fourche. Ainsi, avantageusement et selon l'invention, dans ladite au moins une position de verrouillage, ledit axe pivot est disposé entre lesdits bras de ladite fourche.

Avantageusement et selon l'invention, ledit axe pivot présente une première extrémité longitudinale, dite extrémité distale, s'étendant jusqu'à une paroi dudit carter, et une deuxième extrémité longitudinale (opposée à ladite première extrémité longitudinale), dite extrémité proximale, s'étendant à l'extérieur dudit carter. Ainsi, l'axe pivot permet la transmission d'efforts subis par l'élément pivotant via son extrémité proximale jusqu'au carter via son extrémité distale qui s'appuie au moins en partie sur le carter, par exemple à l'aide d'un palier de butée.

Avantageusement et selon l'invention, un dispositif de verrouillage/déverrouillage comprend en outre au moins un palier de butée dudit axe pivot, ledit palier étant solidaire du carter et présentant un logement de réception de ladite extrémité distale dudit axe pivot. Ceci contribue à la transmission des efforts exercés sur l'élément pivotant ou subis par celui-ci via l'axe pivot au carter et au support sur lequel le carter repose et/ou auquel le carter est fixé.

Avantageusement et selon l'invention, ledit carter est configuré pour pouvoir être solidarisé à un support fixe. Dans le cas d'un véhicule ferroviaire muni dudit élément pivotant, une pièce dudit véhicule ferroviaire forme ce support fixe. Il peut par exemple s'agir d'une paroi (d'un mur ou d'une cloison) ou d'un plancher (sol).

Avantageusement et selon l'invention, ladite fourche est traversée par ledit axe. Avantageusement et selon l'invention, la fourche comprend une base à partir de laquelle s'étendent, orthogonalement à la direction longitudinale de l'axe de verrouillage deux bras. Avantageusement et selon l'invention, la base de ladite fourche enveloppe entièrement (sur tout le périmètre d'une section droite transversale dudit axe de verrouillage) au moins une portion de la longueur dudit axe de verrouillage et s'étend donc radialement au-delà des dimensions dudit axe de verrouillage (dans un plan orthogonal à la direction longitudinale dudit axe de verrouillage). Avantageusement et selon l'invention, lesdits bras de la fourche s'étendent sensiblement parallèlement l'un par rapport à l'autre. La fourche dudit mécanisme de verrouillage d'un dispositif de verrouillage/déverrouillage permet un verrouillage spontané, notamment en cas de mauvaise manipulation ou d'actionnement partiel de l'axe de verrouillage et/ou de l'élément pivotant de la part d'un opérateur. En effet, lesdits bras s'étendant, du même côté, au-delà de ladite base de la fourche tendent, par l'action de la gravité, à basculer vers ledit axe pivot. Ainsi, avantageusement et selon l'invention, ledit axe pivot est configuré pour pouvoir être disposé sous ledit axe de verrouillage dudit dispositif de verrouillage/déverrouillage d'un élément pivotant qui en est muni.

Le mécanisme de verrouillage d'un dispositif selon l'invention est donc configuré pour que les bras de ladite fourche puissent s'étendre au moins en partie jusqu'audit axe pivot (en position de verrouillage).

Ainsi, avantageusement et selon l'invention, ledit mécanisme de verrouillage est configuré pour permettre un retour sensiblement spontané vers ladite au moins une position de verrouillage, à partir de ladite au moins une position de déverrouillage.

Avantageusement et selon l'invention, ledit mécanisme de verrouillage est configuré pour pouvoir être actionné à l'aide d'une clé. Ainsi, avantageusement et selon l'invention, ledit axe de verrouillage présente au moins une extrémité longitudinale configurée pour s'étendre au travers d'une paroi dudit carter. Ceci permet à un opérateur de pouvoir accéder et actionner l'axe de verrouillage aisément, c'est-à-dire depuis l'extérieur dudit carter du dispositif de verrouillage/déverrouillage selon l'invention.

De plus, avantageusement et selon l'invention, ladite extrémité longitudinale de l'axe de verrouillage présente une section droite transversale carrée, en particulier une extrémité longitudinale configurée pour présenter une forme conjuguée de celle de l'extrémité d'une clé présentant une extrémité comprenant un alésage présentant une section droite de forme carrée dite « clé de Berne ».

L'invention concerne également un élément pivotant équipé d'au moins un dispositif de verrouillage/déverrouillage selon l'invention.

Avantageusement et selon l'invention, ledit élément pivotant est configuré pour pouvoir être mobile en rotation entre au moins une position repliée, dans laquelle ledit élément pivotant présente un encombrement réduit, et au moins une position déployée. Le déverrouillage du dispositif de verrouillage/déverrouillage selon l'invention peut être réalisé pour permettre chaque déploiement et chaque repliement de l'élément pivotant (c'est-à-dire à chaque transition entre un état escamoté ou replié de l'élément pivotant et un état d'utilisation (par exemple en tant que support de bagages pour une clayette). Lorsqu'un opérateur a fait pivoter l'élément pivotant jusqu'à une position voulue (repliée ou déployée), le dispositif est verrouillé pour empêcher toute rotation de l'axe pivot et maintenir l'élément pivotant en position.

Avantageusement et selon l'invention, ledit élément pivotant est formé d'une clayette s'étendant principalement selon un plan principal de réception. En particulier, ledit plan de réception s'étend, en position d'utilisation, selon un plan parallèle à un plan horizontal, de telle sorte que l'on puisse y poser des objets ou en suspendre. Il peut en particulier s'agir d'une clayette configurée pour pouvoir recevoir des bagages (et/ou paquets et/ou valises...) de passagers à bord d'un véhicule ferroviaire. Une telle clayette peut en particulier être configurée pour pouvoir être positionnée au-dessus d'une bicyclette.

Avantageusement et selon l'invention, ledit élément pivotant comprend deux vérins à gaz configurés pour pouvoir assister le déplacement en rotation dudit élément pivotant autour de l'axe pivot.

L'invention concerne également un dispositif de verrouillage/déverrouillage, un élément pivotant équipé d'un tel dispositif, ainsi qu'un véhicule ferroviaire équipé d'un tel élément pivotant, caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
- [Fig. 1] représente une vue schématique de face d'un élément pivotant selon un mode de réalisation de l'invention.
- [Fig. 2] représente une vue schématique en perspective d'un dispositif de verrouillage/déverrouillage selon l'invention en position verrouillée.
- [Fig. 3] représente une coupe transversale d'un dispositif de verrouillage/déverrouillage selon l'invention en position verrouillée.
- [Fig. 4] représente une coupe transversale d'un dispositif de verrouillage/déverrouillage selon l'invention en position verrouillée.
- [Fig. 5] représente une vue schématique en perspective d'un dispositif de verrouillage/déverrouillage selon l'invention, en position déverrouillée.
- [Fig. 6] représente une vue schématique en perspective d'un dispositif de verrouillage/déverrouillage selon l'invention, en position déverrouillée.

### Description détaillée d'un mode de réalisation de l'invention

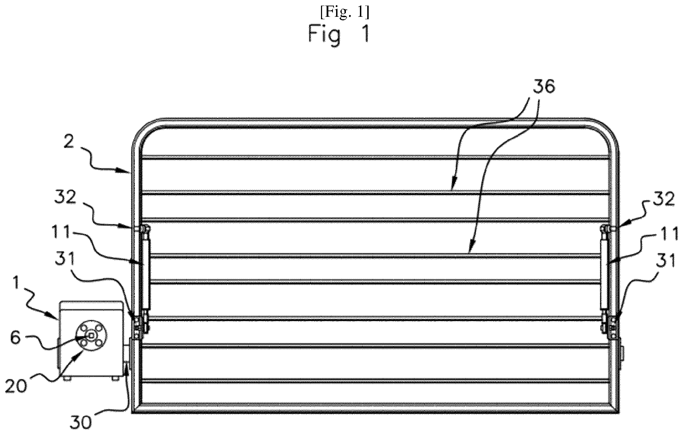

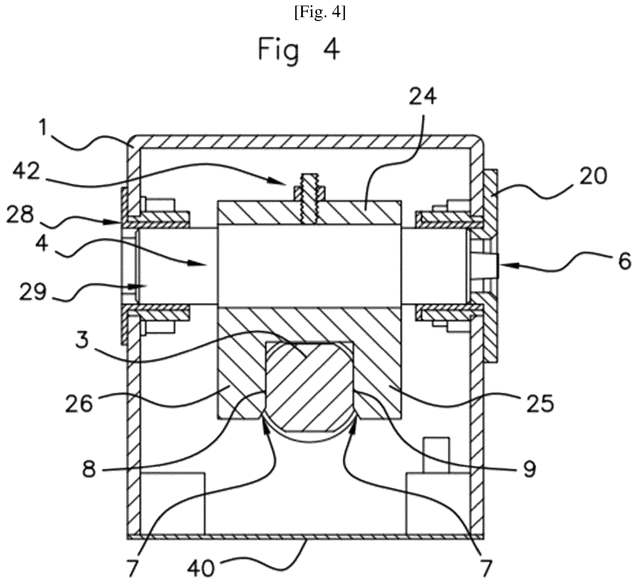

Les figures 1 à 6 illustrent un mode de réalisation d'un dispositif de verrouillage/déverrouillage selon l'invention permettant de verrouiller et de déverrouiller un élément pivotant par un mouvement de rotation.

Dans le mode de réalisation illustré, comme on peut le voir en figure 1, l'élément pivotant 2 est une clayette pouvant être utilisée pour faciliter le positionnement de bicyclettes à bord d'un véhicule ferroviaire. Une telle clayette présente des montants latéraux reliés entre eux par des montants longitudinaux 36 parallèles entre eux. L'élément pivotant 2 est configuré pour pouvoir être déplacé en rotation autour d'un axe pivot 3 se prolongeant au sein d'un carter 1 dudit dispositif de verrouillage/déverrouillage. Sur la figure 1, la clayette est représentée en position dite verticale (ou repliée). La clayette peut être déplacée, pour son utilisation, en position dite horizontale (ou déployée) par une rotation d'un angle de l'ordre de 90° (ou quart de tour) à partir de la position repliée.

Le dispositif de verrouillage/déverrouillage illustré par les figures 1 à 6, comprend le carter 1 à l'intérieur duquel sont disposés l'axe pivot 3 et un mécanisme de verrouillage. Le carter 1 présente un fond 40 pouvant être fixé au sol et/ou à un mur ou à tout autre support, directement ou par l'intermédiaire d'un socle. Le carter 1 présente une forme générale sensiblement cubique. Toutes autres formes parallélépipédiques ou non peuvent également convenir ou être adaptées.

L'axe pivot 3 s'étend selon une direction longitudinale, sensiblement parallèle à la direction longitudinale de l'élément pivotant 2, entre une première extrémité longitudinale, dite extrémité distale 13, s'étendant jusqu'à une paroi du carter 1, et une deuxième extrémité longitudinale, dite extrémité proximale 33, s'étendant vers l'extérieur du carter 1. La portion principale de l'axe pivot 3 s'étendant entre les extrémités distale 13 et proximale 33 présente une section droite transversale non circulaire mais polygonale. Dans le mode de réalisation représenté, l'axe pivot 3 présente une section droite transversale octogonale. En particulier, la portion principale de l'axe pivot 3 présente quatre faces principales parallèles deux à deux entre elles, appelées méplats 8, 9, et quatre faces intermédiaires 16 de largeur inférieure à celle des quatre faces principales de l'axe pivot 3. Chaque méplat 8, 9 s'étend parallèlement à la direction longitudinale de l'axe pivot 3.

L'extrémité distale 13 de l'axe pivot 3 forme une portion cylindrique configurée pour pouvoir être logée dans un palier 10 de butée de l'axe pivot 3, le palier 10 étant solidaire du carter 1. Le palier 10 est monté au travers d'une paroi du carter 1 et fixée à celle-ci.

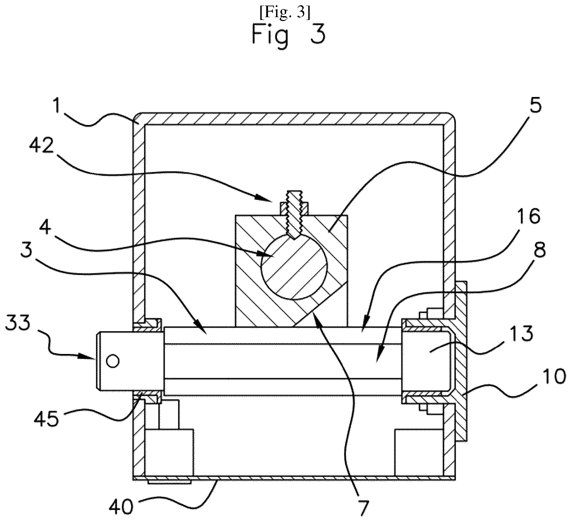

L'extrémité proximale 33 de l'axe pivot 3 forme une portion cylindrique s'étendant au travers d'une paroi du carter 1 comme on peut le voir sur la figure 3 représentant une coupe transversale du dispositif de verrouillage/déverrouillage parallèlement à l'axe longitudinal de l'axe pivot 3.

L'axe pivot 3 est configuré pour pouvoir être solidaire en rotation avec l'élément 2 pivotant.

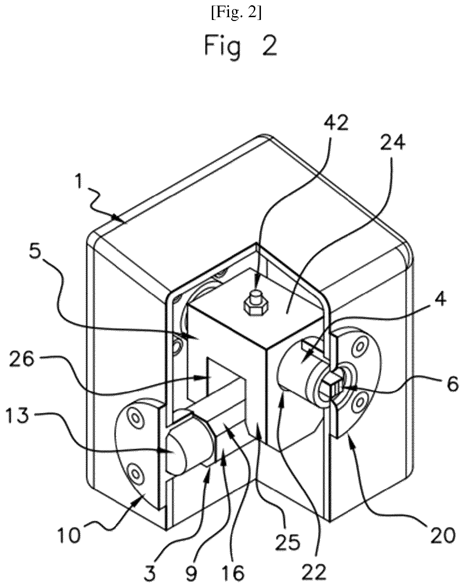

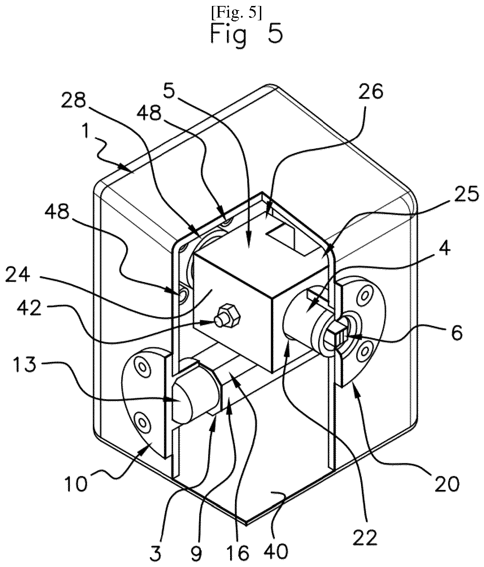

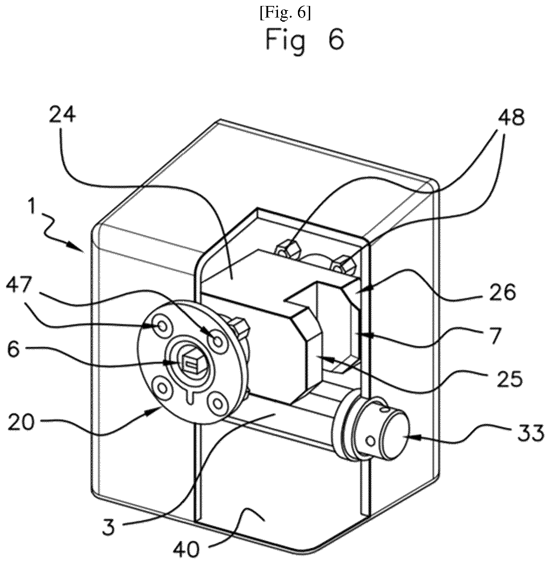

Les figures 2, 5 et 6 sont des vues schématiques en perspective d'un dispositif selon l'invention dont une portion des parois du carter 1 est arrachée pour en faciliter la compréhension. Les figures 2 et 5 illustrent sensiblement un même point de vue du dispositif de verrouillage/déverrouillage, respectivement en positions verrouillée et déverrouillée. La figure 6 illustre le dispositif depuis un point de vue après une rotation de 90° à partir du point de vue de la figure 5.

Le mécanisme de verrouillage est un mécanisme de verrouillage en rotation dudit axe pivot 3 et comprend un axe 4 de verrouillage et un organe, dit fourche 5, monté sur l'axe 4 de verrouillage. L'axe 4 de verrouillage s'étend orthogonalement à l'axe pivot 3. L'axe 4 de verrouillage est mobile en rotation sur lui-même. L'axe 4 présente une première extrémité longitudinale 6 présentant une section droite transversale carrée s'étendant au travers d'une paroi du carter 1 et d'un anneau 20 fixé à celui-ci de façon à permettre à un opérateur d'actionner le mécanisme de verrouillage via cette extrémité ou empreinte. Dans le mode de réalisation représenté, cette extrémité longitudinale 6 présente en outre une rainure droite. L'anneau 20 est fixé au carter 1 à l'aide de quatre boulons 47.

L'axe 4 présente une deuxième extrémité longitudinale 29, opposée à l'extrémité longitudinale 6, de forme cylindrique logée dans un palier 28 de butée solidaire du carter 1, le palier 28 étant monté au travers d'une paroi du carter 1. Le palier 28 de butée est solidarisé au carter 1 à l'aide de quatre boulons 48.

La fourche 5 comprend une base 24 à partir de laquelle s'étendent deux bras 25, 26, les bras 25, 26 s'étendant sensiblement parallèlement entre eux et orthogonalement à la direction longitudinale de l'axe 4 de verrouillage. La fourche 5 est solidaire en rotation de l'axe 4 de verrouillage, un système de fixation à vis et boulon 42 solidarisant la fourche 5 sur l'axe 4 de verrouillage. L'axe 4 de verrouillage traverse la fourche 5. La base 24 de la fourche 5 présente dans la variante de réalisation représentée sur les figures 1 à 6 une forme sensiblement parallélépipédique. La base 24 de la fourche 5 enveloppe entièrement, sur tout son périmètre une portion de la longueur de l'axe 4 de verrouillage et s'étend radialement au-delà des dimensions de celui-ci (dans un plan orthogonal à la direction longitudinale dudit axe de verrouillage).

La fourche 5 est mobile en rotation entre au moins une position de verrouillage (ou verrouillée) dans laquelle les bras 25, 26 s'étendent respectivement au moins en partie au contact des méplats 8, 9 de l'axe pivot 3, de façon à empêcher toute rotation de celui-ci, et au moins une position de déverrouillage (ou déverrouillée) dans laquelle la fourche 5 n'empêche pas la rotation de l'axe pivot 3. Une telle position de verrouillage est illustrée aux figures 2 à 4. Une telle position de déverrouillage est illustrée aux figures 5 et 6.

Dans le mode de réalisation illustré les 8, 9 de l'axe pivot 3 s'étendent parallèlement entre eux. Ainsi, les deux méplats s'étendent parallèlement entre eux en étant séparés d'une distance sensiblement égale (ou légèrement inférieure) à la distance séparant les deux bras de la fourche au contact desdits méplats dans la position de verrouillage, de façon à ce que les deux bras sont disposés en partie autour de l'axe pivot, empêchant toute rotation. En position de verrouillage, l'axe pivot est disposé au moins en partie entre les bras de la fourche.

Une telle fourche 5 facilite, par l'action de la gravité sur celle-ci, le verrouillage spontané du dispositif, notamment en cas de mauvaise manipulation ou d'actionnement partiel de la part d'un opérateur. En effet, depuis toute position déverrouillée, les bras 25, 26 tendent à basculer vers l'axe pivot 3 disposé au-dessous de l'axe 4 de verrouillage. L'axe 4 de verrouillage et la fourche 5 sont donc configurés pour pouvoir être disposés au-dessus de l'axe pivot 3 lorsque le dispositif de verrouillage/déverrouillage équipe un élément pivotant 2.

La fourche 5 présente en outre des chanfreins 7 permettant de faciliter son engagement sur l'axe pivot 3 lors du verrouillage.

Ainsi, partant d'une position repliée de l'élément pivotant 2 comme illustré en figure 1 et dans laquelle le dispositif de verrouillage/déverrouillage est en position verrouillée, un opérateur souhaitant déplacer l'élément pivotant 2 doit déverrouiller le dispositif de verrouillage/déverrouillage de façon à ce que la fourche 5 libère l'axe pivot 3.

Le déverrouillage du dispositif de verrouillage/déverrouillage selon l'invention peut être réalisé pour permettre chaque déploiement et chaque repliement de l'élément pivotant, donc lors de chaque passage entre une position escamotée ou repliée de l'élément pivotant et une position d'utilisation. Lorsqu'un opérateur souhaite faire pivoter l'élément pivotant jusqu'à une position voulue (repliée ou déployée), il déverrouille le dispositif à l'aide d'une clé présentant une extrémité comprenant un alésage présentant une section droite de forme carrée dite clé de Berne (non représentée), cette clé étant configurée pour permettre de déplacer en rotation la première extrémité longitudinale 6 de l'axe 4 de verrouillage. Après avoir atteint la position souhaitée pour l'élément pivotant, l'opérateur verrouille à nouveau le dispositif en effectuant un quart de tour avec sa clé de façon à empêcher toute rotation de l'axe pivot et à maintenir l'élément pivotant en position.

Le carter 1 présente ainsi des dimensions adaptées pour permettre les déplacements de ladite fourche 5 nécessaires aux mouvements de verrouillage/déverrouillage du dispositif selon l'invention.

Le dispositif de verrouillage/déverrouillage selon l'invention peut en outre être équipé d'une goupille 30 (figure 1) permettant de protéger le carter du dispositif de verrouillage/déverrouillage afin d'empêcher ou de limiter les risques de vandalisme par tentative d'actionnement de l'élément pivotant 2 en tentant de faire pivoter en force la clayette vers une position déployée. En cas de détérioration par un tel actionnement en force, il serait alors possible de remplacer la goupille uniquement, le reste du dispositif de verrouillage/déverrouillage ayant été préservé.

L'élément pivotant 2 comprend deux vérins 11 à gaz permettant d'assister le déplacement en rotation de celui-ci autour de l'axe pivot 3 en freinant son basculement lors de son déploiement à partir d'une configuration verticale et en facilitant son repliement à partir de la position déployée. Chaque vérin 11 présente une première extrémité 32 fixée à un montant latéral de l'élément pivotant 2, et une deuxième extrémité 31 fixée à une structure fixe (non représentée).

Chaque pièce d'un dispositif de verrouillage/déverrouillage selon l'invention peut être formée d'au moins un matériau choisi dans le groupe formé des matériaux métalliques (dont les alliages métalliques), des matériaux céramiques, des matériaux polymères et de leurs composites. En particulier, la fourche, l'axe de verrouillage et l'axe pivot sont avantageusement formés d'au moins un matériau métallique, par exemple en acier.

## Revendications

1. Dispositif de verrouillage/déverrouillage pour élément (2) pivotant, ledit dispositif comprenant :
- un axe pivot (3) s'étendant selon une direction longitudinale et configuré pour pouvoir être solidaire en rotation avec ledit élément (2) pivotant,
- un mécanisme de verrouillage en rotation dudit axe pivot (3),
ledit dispositif étant **caractérisé en ce qu'**il comprend en outre :
- un carter (1) configuré pour recevoir ledit axe pivot (3) et ledit mécanisme de verrouillage, ledit axe pivot (3) et ledit mécanisme de verrouillage étant disposés à l'intérieur dudit carter (1),
et **en ce que** :
- ledit axe pivot (3) présente au moins deux méplats (8, 9) s'étendant parallèlement à ladite direction longitudinale dudit axe pivot (3),
- ledit mécanisme de verrouillage comprend :
o un axe (4) de verrouillage s'étendant orthogonalement audit axe pivot (3), ledit axe (4) de verrouillage étant mobile en rotation,
o un organe, dit fourche (5), monté sur ledit axe (4) de verrouillage et solidaire en rotation de celui-ci, ladite fourche (5) présentant deux bras (25, 26) s'étendant sensiblement orthogonalement à la direction longitudinale dudit axe (4) de verrouillage et étant configurée pour pouvoir être mobile en rotation entre au moins une position de verrouillage dans laquelle lesdits bras (25, 26) s'étendent respectivement au moins en partie au contact desdits méplats (8, 9) dudit axe pivot (3), de façon à empêcher toute rotation dudit axe pivot (3), et au moins une position de déverrouillage dans laquelle ladite fourche (5) n'empêche pas la rotation dudit axe pivot (3).

2. Dispositif selon la revendication 1, **caractérisé en ce que** ledit axe pivot (3) présente une première extrémité longitudinale, dite extrémité distale (13), s'étendant jusqu'à une paroi dudit carter (1), et une deuxième extrémité longitudinale, dite extrémité proximale (33), s'étendant à l'extérieur dudit carter (1).

3. Dispositif selon la revendication 2, **caractérisé en ce qu'**il comprend en outre au moins un palier (10) de butée dudit axe pivot (3), ledit palier (10) étant solidaire du carter (1) et présentant un logement de réception de ladite extrémité distale (13) dudit axe pivot (3).

4. Dispositif selon l'une des revendications 1 à 3, **caractérisé en ce que** ladite fourche (5) est traversée par ledit axe (4) de verrouillage.

5. Dispositif selon l'une des revendications 1 à 4, **caractérisé en ce que** ledit carter (1) est configuré pour pouvoir être solidarisé à un support fixe.

6. Dispositif selon l'une des revendications 1 à 5, **caractérisé en ce que** ledit axe (4) de verrouillage présente au moins une extrémité longitudinale (6) configurée pour s'étendre au travers d'une paroi dudit carter (1).

7. Dispositif selon la revendication 6, **caractérisé en ce que** ladite extrémité longitudinale (6) de l'axe (4) de verrouillage présente une section droite transversale carrée.

8. Dispositif selon l'une des revendications 1 à 7, **caractérisé en ce que**, dans ladite au moins une position de verrouillage, ledit axe pivot (3) est disposé entre lesdits bras (25, 26) de ladite fourche (5).

9. Dispositif selon l'une des revendications 1 à 8, **caractérisé en ce que** ledit mécanisme de verrouillage est configuré pour permettre un retour sensiblement spontané vers ladite au moins une position de verrouillage, à partir de ladite au moins une position de déverrouillage.

10. Elément (2) pivotant équipé d'au moins un dispositif de verrouillage/déverrouillage selon l'une des revendications 1 à 9.

11. Elément (2) pivotant selon la revendication 10, **caractérisé en ce qu'**il est formé d'une clayette s'étendant principalement selon un plan principal de réception.

12. Elément (2) pivotant selon la revendication 11, **caractérisé en ce qu'**il comprend deux vérins (11) à gaz configurés pour pouvoir assister le déplacement en rotation dudit élément (2) pivotant autour de l'axe pivot (3).
